## Europäisches Patentamt
## European Patent Office
## Office européen des brevets

(11) Veröffentlichungsnummer: **0 435 102 A2**

# EUROPÄISCHE PATENTANMELDUNG

(21) Anmeldenummer: **90124169.5**

(22) Anmeldetag: **14.12.90**

(51) Int. Cl.5: **B29C 39/42**

(30) Priorität: **23.12.89 DE 3942859**

(43) Veröffentlichungstag der Anmeldung:
**03.07.91 Patentblatt 91/27**

(84) Benannte Vertragsstaaten:
**CH DE FR GB IT LI**

(71) Anmelder: **BASF Aktiengesellschaft**
**Carl-Bosch-Strasse 38**
**W-6700 Ludwigshafen(DE)**

(72) Erfinder: **Scholz, Dankmar**
**Heidelberger Ring 31**
**W-6710 Frankenthal(DE)**

(54) **Verfahren zur Herstellung von Bauteilen.**

(57) Die Erfindung betrifft ein Verfahren zur Herstellung von dreidimensionalen Bauteilen durch Polymerisation eines photopolymerisierbaren flüssigen Systems mit Hilfe von energiereicher Strahlung, wobei man ein Band aus dem flüssigen System aus einer Gießvorrichtung fortlaufend auf die Oberfläche einer Trägerflüssigkeit aufbringt, welche ein höheres spezifisches Gewicht hat als das photopolymerisierbare System und mit diesem nicht mischbar ist. Dieses Band wird durch Bestrahlung zu einer bandförmigen, zweidimensionalen Polymerschicht polymerisiert, anschließend wird die Flüssigkeitsoberfläche angehoben und erneut ein Band aus dem photopolymerisierbaren System aufgebracht und zu einer weiteren Polymerschicht polymerisiert, welche sich mit der vorhergehenden vereinigt. Diese Schritte werden so oft wiederholt bis das dreidimensionale Bauteil aufgebaut ist. Die Verfahrensschritte Bildung des Polymerbandes und Anheben der Flüssigkeitsoberfläche können computergesteuert werden.

EP 0 435 102 A2

## VERFAHREN ZUR HERSTELLUNG VON BAUTEILEN

Beschreibung

Die Erfindung betrifft ein Verfahren zur Herstellung von dreidimensionalen Bauteilen durch Polymerisation eines photopolymerisierbaren flüssigen Systems mit Hilfe von energiereicher Strahlung, wobei man auf einer Flüssigkeitsoberfläche fortlaufend eine bandförmige, zweidimensionale Polymerschicht erzeugt, die Flüssigkeitsoberfläche anhebt und anschließend erneut eine zweidimensionale Polymerschicht erzeugt, die sich mit der vorhergehenden verbindet, und diese Schritte so oft wiederholt bis das dreidimensionale Bauteil aufgebaut ist.

Dieses Verfahren ist unter der Bezeichnung "Stereolithographie" bekannt. Damit kann z.B. aus einer mit Hilfe von Computer-Berechnungen gefestigten Bauteilzeichnung direkt, d.h. ohne mechanische Bearbeitung, ein Modell des Bauteils erzeugt werden. Eine bevorzugte Ausführungsform dieses Verfahrens ist in US-A 4,575,300 beschrieben. Danach wird das dreidimensionale Bauteil in einem Flüssigkeitsbad erzeugt, das aus einem photopolymerisierbaren System besteht. Ein computergesteuerter, beweglicher punktförmiger UV-Lichtstrahl tastet die Oberfläche des Flüssigkeitsbads ab und bewirkt an der Auftreffstelle eine Polymerisation des photopolymerisierbaren Systems. Durch wiederholte Hin- und Herbewegungen des Strahls kann eine aus vielen Rasterpunkten zusammengesetzte zweidimensionale bandförmige Polymerschicht erzeugt werden. Danach wird die Plattform, auf der diese Polymerschicht ruht, abgesenkt, so daß die Flüssigkeitsoberfläche wieder die Polymerschicht bedeutet, und es kann durch gezielte Bestrahlung erneut eine Polymerschicht erzeugt werden. Die Polymerschichten sind so klebrig, daß sie sich im Flüssigkeitsbad miteinander verbinden. Wenn schließlich nach vielmaliger Wiederholung dieser Schritte das Bauteil aufgebaut ist, wird es aus dem Flüssigkeitsbad entfernt, gewaschen und in einem separaten Arbeitsgang vollständig ausgehärtet.

Seit kurzem wird ein Stereolithographie-Verfahren auf dieser Basis in technischem Maßstab praktiziert, wobei als Lichtquelle Laserstrahlen angewandt werden. Das Verfahren ist jedoch trotz der Anwendung von Laserstrahlen recht zeitaufwendig, da eine Vielzahl von Rasterpunkten einzeln bestrahlt werden müssen, und der Laserstrahl erst dann auf einen nachfolgenden Rasterpunkt gerichtet werden kann, wenn an dem vorhergehenden die Polymerisation ausreichend weit fortgeschritten ist, was einige Sekunden in Anspruch nimmt. Trotz dieser langen Polymerisationsdauer ist eine Nachhärtung des Bauteils in einem gesonderten Verfahrensschritt erforderlich. Außerdem ist die Anwendung von Laserstrahlen recht teuer.

Der Erfindung lag also die Aufgabe zugrunde, ein einfaches und kostengünstiges Verfahren für die Stereolithographie zu entwickeln, nach welchem in verhältnismäßig kurzer Zeit dreidimensionale Bauteile auch von komplizierter Raumform hergestellt werden können.

Diese Aufgabe stellt sich insbesondere bei einem Verfahren zur Herstellung von dreidimensionalen Bauteilen durch Polymerisation eines photopolymerisierbaren flüssigen Systems mit Hilfe von energiereicher Strahlung, wobei man

a) auf einer Flüssigkeitsoberfläche eine bandförmige, zweidimensionale Polymerschicht erzeugt,

b) die Flüssigkeitsoberfläche um einen Betrag, welcher der Dicke der bandförmigen Polymerschicht entspricht, anhebt und anschließend erneut eine zweidimensionale Polymerschicht erzeugt, die sich mit der vorhergehenden verbindet, und

c) die Schritte a) und b) so oft wiederholt, bis das dreidimensionale Bauteil aufgebaut ist.

Erfindungsgemäß wird nun auf die Flüssigkeitsoberfläche aus einer Gießvorrichtung fortlaufend ein Band aus dem photopolymerisierbaren flüssigen System, welches ein geringeres spezifisches Gewicht hat als die Trägerflüssigkeit und mit dieser nicht mischbar ist, aufgebracht und anschließend durch Bestrahlung polymerisiert.

Das erfindungsgemäße Verfahren geht aus von einem photopolymerisierbaren flüssigen System, vorzugsweise auf Basis von ethylenisch ungesättigten Acryl- oder Vinylverbindungen. Bevorzugt sind höhermolekulare Verbindungen, z.B. langkettige Acrylsäureester oder Umsetzungsprodukte von Acrylsäure oder Methacrylsäure mit Di- oder Polyepoxiden, sogenannte Epoxyacrylate. Geeignet sind ferner ungesättigte Polyester, sowie längerkettige Divinylverbindungen. Die flüssigen Systeme sollten eine erhöhte Viskosität aufweisen, vorzugsweise sollte die Viskosität mehr als 1000 mPas betragen. Diese erhöhte Viskosität kann auch durch Zusatz von Thixotropiermitteln, wie feinteiliger Kieselsäure, Isocyanat-Prepolymere oder hydrierte Rizinusöle erreicht werden. Die Systeme enthalten einen Photoinitiator. Dieser ist so zu wählen, daß die Wellenlänge, bei der er die Photopolymerisation auslöst, sich mit der Wellenlänge der angewandten Strahlung überschneidet. Geeignete Photoinitiatoren sind z.B. Acylphosphinoxide, wie 2.4.6-Trimethylbenzoyldiphenylphosphinoxid; Benzilketale, wie Benzildimethylketal; Benzoinether, wie Benzoinethylether; ferner Benzil in Kombination mit aliphatischen Aminen. Die Photoinitiatoren sind in dem flüssigen System in Mengen von vorzugsweise 0,01 bis 0,2 Gew.% enthalten. Das photopolymerisierbare System kann gegebenenfalls weitere übliche Zusatzstoffe enthalten, wie z.B. Inhibitoren oder lichtdurchlässige Füllstoffe.

Dieses flüssige System wird aus einer Gießvorrichtung auf die Flüssigkeitsoberfläche aufgebracht. Die Gießvorrichtung weist eine Düse auf, deren Querschnitt bzw. Durchmesser die Breite des polymerisierenden Bandes bestimmt. Um dabei variabel zu sein, kann man nacheinander mehrere Düsen mit verschiedenem Querschnitt anwenden oder man kann eine Düse mit verstellbarem Querschnitt vorsehen. Zur Erzeugung breiter Bänder ist es auch möglich, die Gießvorrichtung mehrere Male längs oder quer über der Flüssigkeitsoberfläche hin und her zu führen. Im Gegensatz zu dem Verfahren nach US 4.575.300, wo nacheinander eine rasterpunktförmige Bestrahlung und Polymerisation vorgenommen wird, erfolgt die Bewegung der Gießvorrichtung über der Flüssigkeitsoberfläche kontinuierlich und stetig.

Der Abstand zwischen der Düse und der Flüssigkeitsoberfläche ist möglichst gering zu halten, damit der ausfließende Flüssigkeitsstrahl eine konstante Breite behält und z.B. nicht auffächert. Ein Abstand von höchstens 3 mm ist bevorzugt. Die Flüssigkeit, auf deren Oberfläche das photopolymerisierbare System aufgebracht wird, darf mit diesem nicht mischbar sein und sollte mit ihm auch nicht reagieren. Das spezifische Gewicht der Trägerflüssigkeit muß etwas höher sein als das des photopolymerisierbaren Systems, damit dieses beim Aufbringen nichtg einsinkt, sondern auf der Flüssigkeit schwimmt. Der Unterschied in den spezifischen Gewichten sollte allerdings auch nicht zu groß sein, da sonst der Auftrieb des photopolymerisierbaren Systems auf der Flüssigkeitsoberfläche zu stark ist, was zum Verlaufen führen könnte. Wenn das flüssige System ausreichend viskos ist, verliert es beim Aufbringen auch seine Kontur nicht oder nur in sehr geringem Maß, insbesondere dann nicht, wenn die Polymerisation rasch verläuft. Bei der Polymerisation tritt im allgemeinen ein Schrumpfen ein, wobei das spezifische Gewicht ansteigt. Dann sinkt die gebildete Polymerschicht stärker in die Trägerflüssigkeit ein, was erwünscht ist. Bevorzugt ist die Trägerflüssigkeit einer Feststoff-Lösung, deren spezifisches Gewicht durch die Menge an gelöstem Feststoff gezielt eingestellt werden kann. Besonders geeignet ist eine wäßrige Salzlösung.

Die energiereiche Strahlung, welche die Photopolymerisation auslöst, kann sichtbares, UV- oder IR-Licht beliebiger Wellenlänge sein. Bevorzugt ist UV-Licht einer Wellenlänge von 340 bis 450 $\mu$m, wie es z.B. von handelsüblichen Quarzlampen ausgestrahlt wird. Dieses Licht bestrahlt stetig die gesamte Flüssigkeitsoberfläche, vorzugsweise von allen Seiten. Dies steht im Gegensatz zu dem Verfahren nach US 4.575.300, wo die Bestrahlung punktförmig erfolgt, was eine teure Laserquelle erfordert. Die polymerisationsauslösende Bestrahlung erfolgt nicht nur im Augenblick des Auftreffens des Flüssigkeitsfilms auf der Oberfläche der Trägerflüssigkeit, sondern auch während des gesamten Prozesses, auch unterhalb der Flüssigkeitsoberfläche. Das gebildete Polymerband kann also praktisch vollständig aushärten. Bei einer bevorzugten Arbeitsweise hat das Polymerband eine Dicke von 0,02 bis 5 mm, insbesondere von 0,1 bis 1 mm; es ist innerhalb von 2 bis 20 sec. soweit polymerisiert, daß es feste Konsistenz aufweist. Zusätzlich kann das polymerisierbare flüssige System und/oder die Trägerflüssigkeit auf erhöhte Temperatur gebracht werden.

Wenn die erste bandförmige, zweidimensionale Polymerschicht erzeugt ist, wird die Flüssigkeitsoberfläche um einen Betrag, welcher der Dicke der gebildeten Polymerschicht entspricht, angehoben und es wird anschließend erneut eine zweidimensionale Polymerschicht erzeugt. Dieses Anheben der Flüssigkeitsoberfläche kann apparativ auf verschiedene Weise realisiert werden, beispielsweise nach US-A 4,575,330 durch eine motorisch gesteuerte Plattform, auf der das sich bildende dreidimensionale Bauteil ruht. Diese Plattform wird abgesenkt, wenn die erste Polymerschicht sich gebildet hat. Dadurch steigt die Flüssigkeitsoberfläche relativ zum Bauteil an und bedeckt die gebildete Polymerschicht. Auf diese kann dann die nächste Schicht aufgetragen und gehärtet werden. Die Photopolymerisation der ersten Schicht ist dabei im allgemeinen nur so weit fortgeschritten, daß die Oberfläche noch etwas klebrig ist, so daß die neu gebildete zweite Schicht daran haftet und die beiden Schichten sich verbinden.

Grundsätzlich ist es auch möglich, das sich bildende dreidimensionale Bauteil stationär mit dem Boden des Flüssigkeitsgefäßes zu verbinden und die Flüssigkeitsoberfläche dadurch anzuheben, daß nach abgeschlossener Bildung der ersten Polymerschicht eine berechnete Menge Trägerflüssigkeit nachgefüllt wird. Dabei muß dann aber auch die Gießvorrichtung um den entsprechenden Betrag angehoben werden.

Die Verfahrensschritte a) Bildung des Polymerbandes und b) Anheben der Flüssigkeitsoberfläche werden so oft wiederholt, bis das dreidimensionale Bauteil aufgebaut ist. Dabei können nicht nur senkrechte Wände (durch exaktes Übereinanderführen der einzelnen Polymerbänder) aufgebaut werden, sondern (durch entsprechende Positionierung der Bänder) auch schräge Flächen sowie wagerechte Zonen durch Auftrag breiterer Bänder.

Ebenso wie bei dem Verfahren nach US-A 4,575,330 können auch bei dem erfindungsgemäßen Verfahren die Schritte a) und b) computergesteuert ausgeführt werden, indem z.B. die Gießvorrichtung mit einem Roboterarm verbunden ist, der seinerseits von einem Rechner gesteuert wird.

Der Hauptvorteil des erfindungsgemäßen Verfahrens gegenüber dem nach US-A 4,575,330 besteht darin, daß es wesentlich rascher durchführbar ist. Ferner sind die erhaltenen Bauteile praktisch vollständig ausgehärtet, da die Lichtstrahlen die Trägerflüssigkeit weit durchdringen und somit auch die unteren Bereiche des Bauteils erreichen und nachhärten. Schließlich entfällt die teure Laserquelle und es wird weniger von dem photopolymerisierbaren flüssigen System verbraucht, da alles, was aus der Gießvorrichtung austritt, polymerisiert wird, so daß keine Verluste durch einen Waschprozeß auftreten.

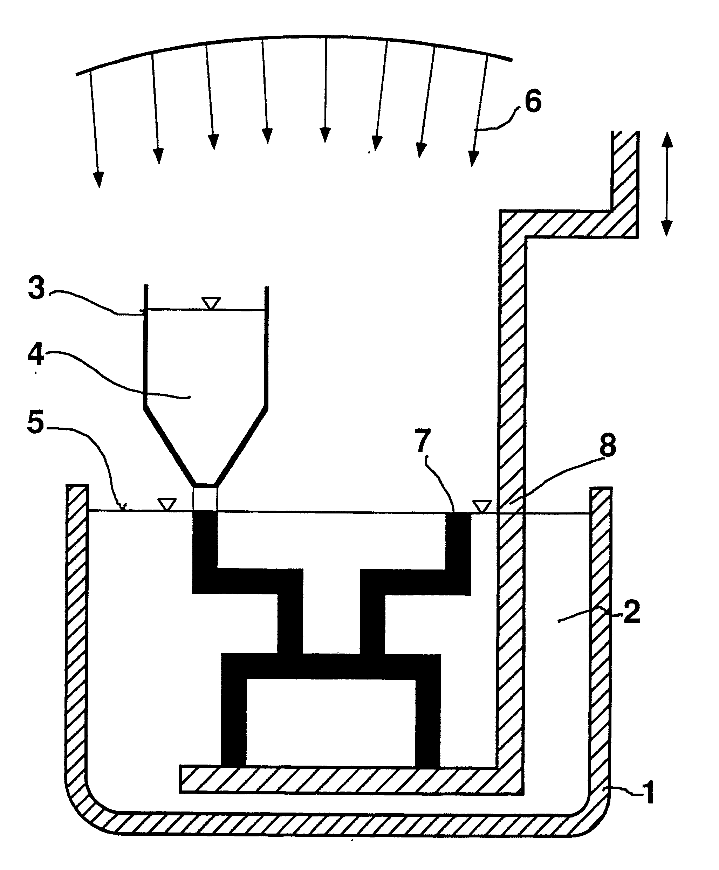

In der Figur ist eine bevorzugte Ausführungsform der Erfindung schematisch skizziert:

In einem Gefäß (1) befindet sich die Trägerflüssigkeit (2). Aus der Gießvorrichtung (3) wird das photopolymerisierbare flüssige System (4) auf die Oberfläche (5) der Trägerflüssigkeit aufgebracht. Durch energiereiche Strahlung (6), welche auf das auf die Flüssigkeitsoberfläche aufgebrachte Band auftritt, wird die Polymerisation ausgelöst und schichtenweise das dreidimensionale Bauteil (7) aufgebaut, welches auf einer heb- und senkbaren Plattform (8) ruht. Die Bewegungen von Gießvorrichtung und Plattform sind computergesteuert.

Nach dem erfindungsgemäßen Verfahren können beliebig gestaltete Bauteile, auch solche mit kompliziertem Innengefüge, hergestellt werden, z.B. Modelle, Musterteile und Prototypen für eine Serienfertigung.

**Ansprüche**

1. Verfahren zur Herstellung von dreidimensionalen Bauteilen durch Polymerisation eines photopolymerisierbaren flüssigen Systems mit Hilfe von energiereicher Strahlung, wobei man

    a) auf einer Flüssigkeitsoberfläche eine bandförmige, zweidimensionale Polymerschicht erzeugt,

    b) die Flüssigkeitsoberfläche um einen Betrag, welcher der Dicke der bandförmigen Polymerschicht entspricht, anhebt und anschließend erneut eine zweidimensionale Polymerschicht erzeugt, die sich mit der vorhergehenden verbindet, und

    c) die Schritte a) und b) so oft wiederholt, bis das dreidimensionale Bauteil aufgebaut ist,

    dadurch gekennzeichnet, daß auf die Flüssigkeitsoberfläche aus einer Gießvorrichtung fortlaufend ein Band aus dem photopolymerisierbaren flüssigen System, welches ein geringeres spezifisches Gewicht hat als die Trägerflüssigkeit und mit dieser nicht mischbar ist, aufgebracht und anschließend durch Bestrahlung polymerisiert wird.

2. Verfahren zur Herstellung von Bauteilen nach Anspruch 1, dadurch gekennzeichnet, daß das photopolymerisierbare flüssige System eine ethylenisch ungesättigte Acryl- oder Vinyl-Verbindung sowie einen Photoinitiator umfaßt.

3. Verfahren zur Herstellung von Bauteilen nach Anspruch 1, dadurch gekennzeichnet, daß das photopolymerisierbare flüssige System thixotrop ist,

4. Verfahren zur Herstellung von Bauteilen nach Anspruch 1, dadurch gekennzeichnet, daß die Trägerflüssigkeit, auf deren Oberfläche das photopolymerisierbare flüssige System aufgebracht wird, eine wäßrige Salzlösung ist.

5. Verfahren zur Herstellung von Bauteilen nach Anspruch 1, dadurch gekennzeichnet, daß das Aufbringen des Bandes aus der Gießvorrichtung auf die Flüssigkeitsoberfläche computergesteuert ist.